# FASCICULE DE BREVET EUROPEEN

(11) **EP 1 026 091 B1**
(45) Date de publication et mention de la délivrance du brevet: **01.08.2007**
(21) Numéro de dépôt: 00400036.0
(22) Date de dépôt: 07.01.2000
(51) Int. Cl.: B65D 21/02, A22C 7/00

(54) **Structure rigide, notamment une structure formant outil de cuisson industrielle d'aliments**
Starre Struktur, insbesondere Struktur zum industriellen Kochen von Nahrungsmitteln
Rigid structure, especially structure of industrial cooking device for foodstuffs

(30) Priorité: 02.02.1999 FR 9901150
(43) Date de publication de la demande: 09.08.2000
(73) Titulaire: ARMOR INOX SA, F-56430 Mauron (FR)
(72) Inventeur: Dreano, Claude, 56430 Mauron (FR)
(74) Mandataire: Geismar, Thierry

(56) Documents cités:
- EP-A- 0 292 417
- EP-A- 0 459 935
- DE-U- 9 112 146
- FR-A- 2 485 884
- FR-A- 2 690 899

## Description

La présente invention se rapporte à une structure rigide, notamment à une structure formant outil de cuisson industrielle d'aliments, comme par exemple ces jambons ainsi qu'un procédé d'assemblage d'une telle structure.

Il est habituel de déposer des jambons à cuire, emballés ou non dans des sacs en matière plastique, dans des ustensiles de cuisson empilables, comportant une pluralité de récipients assurant le maintien de jambons durant la cuisson, d'empiler les ustensiles et de déposer la pile d'ustensiles garnis de jambons à cuire dans une cellule de cuisson dans laquelle on fait pénétrer un fluide colporteur de calories. Toutefois, il n'est pas aisé d'assembler une pluralité de récipients dans une structure rigide susceptible de supporter des efforts importants tels que ceux engendrés par la masse des jambons déposés dans ces récipients.

C'est par conséquent un but de la présente invention d'offrir une structure rigide comportant une pluralité de récipients, notamment des récipients individuels de cuisson de jambons

C'est également un but de la présente invention d'offrir une telle structure facile à manipuler, notamment à empiler.

C'est aussi un but de la présente invention d'offrir une pluralité d'ustensiles de cuisson empilables, parfaitement identiques, c'est-à-dire avec des variations géométriques négligeables.

C'est également un but de la présente invention d'offrir un ustensile de cuisson industrielle ayant un prix de revient modéré.

C'est également un but de la présente invention d'offrir un procédé d'assemblage d'éléments pour former une structure rigide.

Des exemples de structures rigides qui rappellent celle de l'invention sont connues de US-A-4 740 032 et DE-U-201 09 954.

Selon la présente invention, les éléments assemblés sont munis d'au moins une patte ou languette comportant une encoche ou rainure d'assemblage, alors qu'une tôle ou poutre transversale comporte des encoches ou rainures complémentaires d'une pluralité desdites pattes ou languettes, chacune munie d'une encoche ou rainure d'assemblage. Chaque encoche de la tôle ou poutre transversale est disposée en vis à vis desdites encoches d'assemblage et présente une largeur égale, ou sensiblement égale, à la somme des épaisseurs des pattes ou languettes augmentées du jeu nécessaire à leur introduction en vue de l'assemb!age d'une pluralité d'éléments dans chaque encoche.

Avantageusement, la structure, selon la présente invention comporte une pluralité de tôles ou de poutres transversales, chacune comportant une pluralité d'encoches recevant une, ou de préférence, plusieurs groupes de pattes ou de languettes.

Avantageusement, chacun des éléments de la structure est maintenu à l'aide d'au moins deux pattes ou languettes.

Avantageusement, les éléments de la structure, selon la présente invention, comportent des pattes ou languettes saillantes par rapport à deux de leurs faces opposées, permettant le maintien de chaque élément par deux tôles ou poutres transversales consécutives.

D'autre part, les éléments individuels de la structure selon la présente invention, peuvent être assemblés en module rigide, les pattes ou languettes munies d'encoches d'assemblage dépassant du module, de préférence sur ses deux faces opposées de manière à permettre leur assemblage avec des tôles ou des poutres transversales.

La présente invention a principalement pour objet une structure rigide comportant une pluralité d'éléments assemblés par des pattes ou languettes avec une poutre ou tôle transversale par rapport auxdites pattes ou languettes, caractérisée en ce que les pattes ou languettes comportent des premières encoches d'assemblages, en ce que la poutre ou tôle transversale comporte une deuxième encoche complémentaire des premières encoches d'assemblages desdites pattes ou languettes et en ce qu'une pluralité des pattes ou languettes est emboîtée au niveau de leurs premières encoches d'assemblages dans une deuxième encoche de la poutre ou de la tôle transversale.

La présente invention a aussi pour objet une structure rigide, caractérisée en ce que des éléments assemblés par l'intermédiaire d'une même deuxième encoche pratiquée dans la poutre ou tôle transversale sont disposés de part et d'autre de ladite poutre ou tôle transversale, de préférence en vis à vis.

La présente invention a également pour objet une structure rigide, caractérisée en ce que deux éléments assemblés par emboîtement de leurs pattes ou languettes dans une même encoche d'une poutre ou tôle transversale sont disposés du même côté de cette poutre ou tôle transversale.

La présente invention a aussi pour objet une structure rigide, caractérisée en ce que les éléments assemblés comportent au moins une première patte saillante par rapport à une première face et une deuxième patte ou languette saillante par rapport à une deuxième face, opposée à ladite première face de l'élément

La présente invention a également pour objet une structure rigide, caractérisée en ce qu'elle comporte des moyens de groupage d'une pluralité d'éléments en module et en ce que les pattes ou languettes des divers éléments du module dépassent du module de manière à permettre l'emboîtement de leurs encoches dans les encoches correspondantes d'une poutre ou tôle transversale.

La présente invention a aussi pour objet une structure rigide, caractérisée en ce que ladite structure est un ustensile de cuisson industrielle de jambons.

La présente invention a également pour objet une structure rigide, caractérisée en ce que les éléments sont des récipients individuels de cuisson de jambons notamment en forme de trapèze isocèle à angles arrondis.

La présente invention a aussi pour objet une structure rigide, caractérisée en ce qu'elle est symétrique par rapport à deux plans perpendiculaires.

La présente invention a également pour objet une structure rigide, caractérisée en ce que ladite structure est empilable et en ce qu'elle comporte des pieds permettant le passage de fourches d'un engin de manutention sous la structure inférieure d'une pile de structures empilées.

La présente invention a aussi pour objet une structure rigide, caractérisée en ce qu'elle comporte sous chaque récipient de réception d'un jambon un couvercle assurant le confinement et/ou le pressage de jambons se trouvant dans le récipient immédiatement inférieur.

La présente invention a également pour objet un procédé d'assemblage d'une structure rigide, caractérisé en ce qu'il comporte les étapes consistant à emboîter dans une encoche d'une tôle ou d'une poutre transversale au moins deux encoches complémentaires pratiquées dans des patte ou languettes solidarisées avec au moins deux éléments à assembler.

La présente invention sera mieux comprise au moyen de la description ci-après et des figures annexées, données comme des exemples non limitatifs, et sur lesquelles :
- la figure 1 est une vue schématique en plan d'un premier exemple de réalisation d'une structure selon la présente invention ;
- la figure 2 est une vue schématique en plan d'un deuxième exemple de réalisation d'une structure selon la présente invention,
- la figure 3 est une vue schématique en plan d'un troisième exemple de réalisation d'une structure selon la présente invention ;
- la figure 4 est une vue schématique en plan d'un quatrième exemple de réalisation d'une structure selon la présente invention ;
- la figure 5 est une vue schématique en plan d'un cinquième exemple de réalisation d'une structure selon la présente invention ;
- la figure 6 est une vue en plan de l'exemple préféré de réalisation d'un élément d'une structure selon la présente invention ;
- la figure 7 est une vue de côté de l'élément de la figure 6 avant la pose d'un fond ;
- la figure 8 est une vue en plan de l'exemple préféré de réalisation d'un module d'une structure selon la présente invention ;
- la figure 9 est une vue de côté de l'élément de la figure 6 muni d'un fond et d'un couvercle pour un élément immédiatement inférieur ;
- la figure 10 est une vue en élévation d'une tôle transversale mise en oeuvre dans une structure selon la présente invention ;
- la figure 11 est une vue en plan de l'exemple préféré de réalisation d'une structure selon la présente invention ;
- la figure 12 est une vue en coupe selon XII-XII de la structure de la figure 11;
- la figure 13 est une vue analogue partielle de la vue de la figure 12 illustrant deux structures empilées l'une sur l'autre ;
- la figure 14 est une vue de devant de la structure de la figure 11 ;
- la figure 15 est une vue analogue, partielle de la figure 14 illustrant deux structures selon la présente invention empilées.

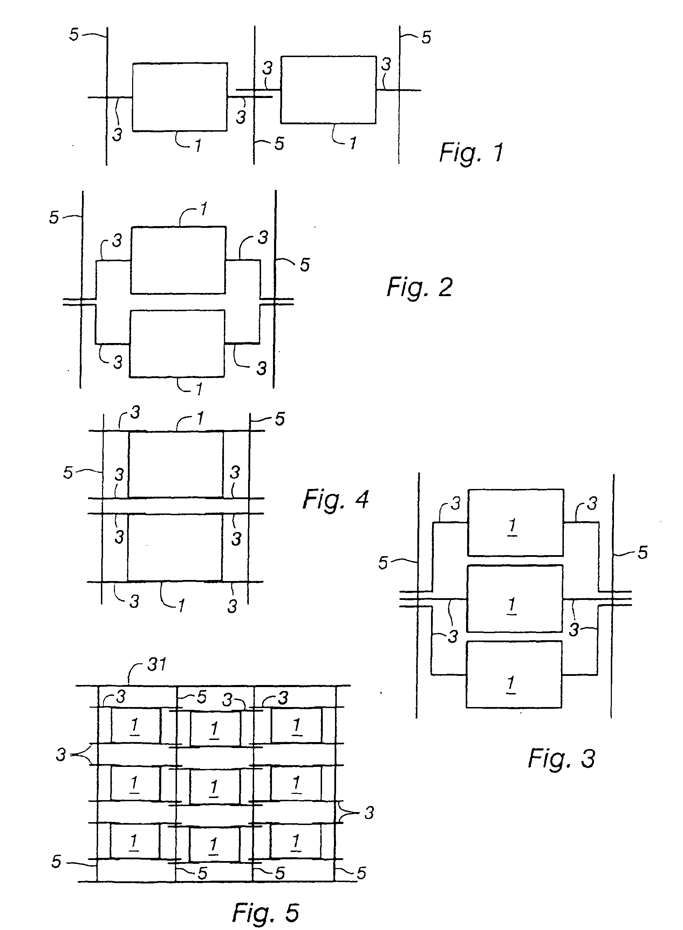

Sur les figures 1 à 15, on a utilisé les mêmes références pour désigner les mêmes éléments.

Sur les schémas symboliques des figures 1 à 5, les pattes disposées dans une même encoche sont, pour des raisons de clarté, illustrées légèrement écartées les unes par rapport aux autres, de manière à illustrer leurs positions relatives.

Sur la figure 1, on peut voir un premier exemple de réalisation d'une structure selon la présente invention, comportant deux éléments 1 avantageusement identiques, chacun étant muni sur au moins une de ses faces d'une patte ou languette 3 Dans l'exemple non limitatif illustré, les éléments 1 sont des récipients de base rectangulaire, les pattes 3 étant solidarisées au milieu des parois verticales formant les petits côtés des éléments 1. Les pattes 3 sont munies d'encoches d'assemblage s'étendant par exemple, sur sensiblement la moitié de la hauteur de la patte 3.

Une tôle ou poutre transversale 5 disposée perpendiculairement aux pattes ou languettes 3 comporte une encoche complémentaire des encoches d'assemblage pratiquées dans les pattes ou languettes 3. Ainsi, l'ouverture de l'encoche est disposée en vis à vis de l'ouverture des encoches d'assemblage pratiquées dans les pattes ou languettes 3 et sa profondeur est, de préférence, égale à sensiblement la moitié de la hauteur des pattes ou languettes 3. La largeur de l'encoche pratiquée dans la poutre ou tôle transversale 5 permet d'introduire à force, avec peu de jeu, ou sans jeu, deux pattes ou languettes 3, disposées parallèlement au niveau de leur encoche d'assemblage. Typiquement, la largeur de l'encoche pratiquée dans la tôle ou la poutre transversale 5 est très légèrement supérieure à la somme des épaisseurs de languettes 3 à assembler.

Dans l'exemple illustré sur la figure 1, les deux éléments 1 se trouvent en vis à vis de part et d'autre de la poutre ou tôle transversale 5.

Il est bien entendu que la présente invention n'est pas limitée à la mise en oeuvre d'une poutre ou tôle transversale 5 unique par structure. Dans l'exemple illustré, la structure comporte une pluralité de poutres ou tôles 5 parallèles consécutives. Pour assembler linéairement un nombre d'éléments 1 supérieur à 2, on utilise des poutres ou tôles transversales 5 intermédiaires, semblables à la tôle médiane de la structure de la figure 1. La structure peut être terminée par des tôles d'extrémité munies d'encoches complémentaires d'une encoche d'assemblage d'une patte 3 unique. En d'autres termes, les encoches des tôles 5 d'extrémité ont une largeur sensiblement égale ou légèrement plus grande que l'épaisseur d'une patte ou languette 3. De même, on peut disposer une pluralité de lignes d'éléments 1 parallèlement les unes aux autres, chaque poutre ou tôle transversale 5 mise en oeuvre comportant des encoches de préférence régulièrement réparties sur tout ou partie de sa longueur. Ainsi, en reprenant le motif illustré sur la figure 1, on peut constituer une structure matricielle comportant une pluralité de lignes d'éléments 1, chaque ligne comportant une pluralité d'éléments 1 assemblés. La structure est assez rigide par elle même, elle peut toutefois être complétée par des éléments de renforcement, tel qu'un cadre périphérique (non illustré sur la figure). Ainsi, la présente invention permet de réaliser des structures ayant une faible épaisseur par rapport à leur surface tout en présentant une excellente résistance à la déformation.

Il est bien entendu que la présente invention n'est pas limitée à l'assemblage d'éléments 1 disposés de part et d'autre d'une poutre ou tôle transversale 5. Dans l'exemple illustré sur la figure 2, deux éléments 1 sont disposés parallèlement l'un à l'autre, leurs pattes ou languettes 3 étant repliées pour pouvoir être disposées dans une encoche de la tôle ou de la poutre 5 située, par exemple dans le plan médian entre les deux éléments 1. Dans l'exemple illustré, chaque patte ou languette 3 a une forme en Z présentant deux angles droits de sens opposé. Dans l'exemple illustré sur la figure 2, les deux éléments 1 sont assemblés par deux poutres ou tôles transversales 5 consécutives.

Il est bien entendu que la présente invention n'est pas limitée à un assemblage de pattes ou languettes 3 dans une même encoche d'une poutre ou tôle transversale 5. Dans l'exemple illustré sur la figure 3, on assemble trois éléments 1 selon la présente invention. L'élément 1 central comporte des pattes ou languettes 3 droites, analogues à celles illustrées sur la figure 1. Les deux éléments 1 d'extrémités sont munis de pattes ou languettes 3 en Z analogues à celles illustrés sur la figure 2 mais dont le décalage latéral ménage un espace suffisant pour accueillir l'élément 1 central.

Dans l'exemple illustré sur la figure 4, chaque élément 1 est muni de deux pattes ou languettes 3 à chacune de ses deux extrémités. Par exemple, les pattes ou languettes 3 sont solidarisées avec les parois verticales de chacun des grands côtés de l'élément 1 et sont disposés, vers l'extérieur, dans le prolongement de ces parois.

Par exemple, dans le cas d'une construction métallique, les pattes 3 forment des tôles soudées sur une certaine longueur des parois formant les grands côtés de l'élément 1.

En variante, une tôle unique, solidarisée sur toute la longueur de l'élément 1 dépasse des deux côtés et forme deux pattes 3 opposées. Une tôle analogue est disposée sur le grand coté opposé de l'élément 1.

De même, sans sortir du cadre de la présente invention, les grands côtés de l'élément 1 peuvent être formés par une tôle dont les extrémités saillantes au-delà du petit côté de l'élément 1, comportent des encoches d'assemblage et jouent leur rôle de pattes ou languettes 3. Le petit côté étant dans ce cas, assemblé par exemple, par soudure sur les tôles formant le grand côté et les pattes d'assemblage 3.

Toutefois, il est bien entendu que la présente invention n'est pas limitée à la fixation des pattes 3 dans le prolongement du grand côté de l'élément 1, ni à la mise en oeuvre d'éléments ayant la forme d'un parallélépipède rectangle. Au contraire, la structure selon la présente invention permet d'assembler des éléments 1 ayant toute forme désirée.

Deux éléments 1 de la figure 4 sont avantageusement disposés côte à côte de manière jointive. Ainsi, une même encoche pratiquée dans une poutre ou tôle transversale 5 peut accueillir les encoches des pattes ou languettes 3 de deux éléments 1 consécutifs.

Il est bien entendu que, comme dans le cas de la structure 1, le motif illustré sur les figures 2, et 4 peut être répété en largeur et en longueur de manière à former une structure présentant la surface et le nombre d'éléments 1 désirés.

Il est bien entendu que les modes d'assemblages des figures 1 à 4 peuvent être combinés entre eux. Par exemple, sur la figure 5, on a illustré la combinaison du mode d'assemblage de la figure 4 (patte ou languette 3 située dans le prolongement du grand côté des éléments 1) avec le mode d'assemblage illustré sur la figure 1 (assemblage d'éléments 1 disposés en vis à vis de part et d'autre d'une poutre ou tôle transversale 5).

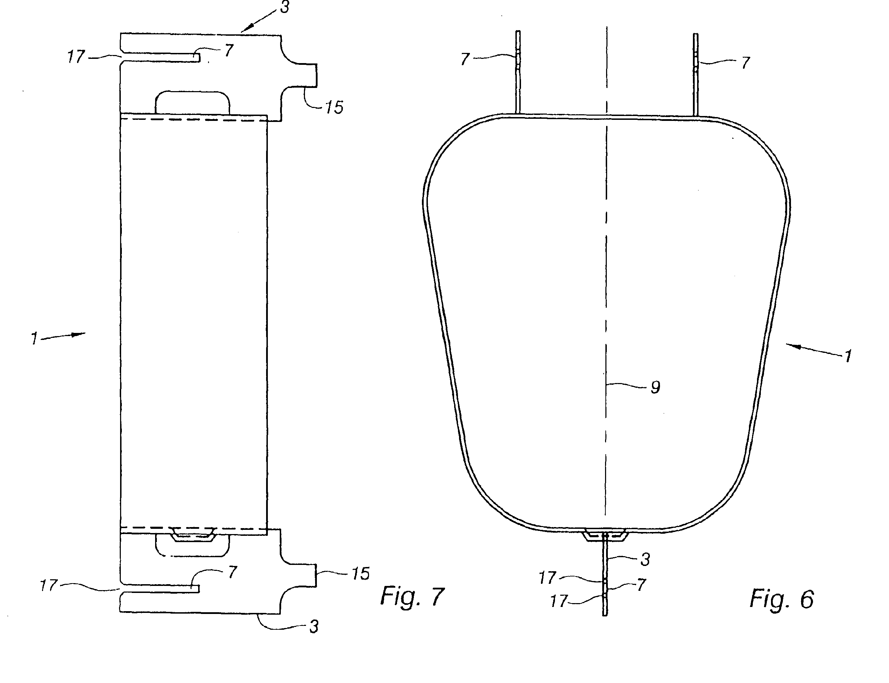

L'assemblage, selon la présente invention, permet de réaliser notamment des ustensiles pour cuisson industrielle de jambons. Sur les figures 6 et 7, on peut voir un élément 1 formant un récipient individuel pour la cuisson de jambons. Sans que cela présente un quelconque caractère limitatif, le récipient 1 illustré a une base en forme de trapèze isocèle à angles arrondis. Cette forme appelée *mandoline* est particulièrement appréciée par les consommateurs espagnols. Toutefois, il est bien entendu que la mise en oeuvre de récipient de réception individuel de jambons en vue de leur cuisson ayant d'autres formes, comme par exemple, parallélépipède rectangle à coins arrondis, à base ovale, à base elliptique, en forme de tonneau ou autre, des récipients de réception d'une pluralité de jambons en vue de leur cuisson, notamment en forme de goulotte allongée à fond plat ou arrondi, des récipients de cuisson d'autres aliments ou d'autres formes ne sortent pas du cadre de la présente invention.

Dans l'exemple non limitatif illustré, une première patte 3 munie d'une encoche 7 s'étend perpendiculairement au milieu de la face externe du petit côté du triangle isocèle. Deux autres pattes de fixation 3 s'étendent perpendiculairement à la face externe du grand côté parallèle au petit côté du triangle isocèle. Avantageusement, ces deux dernières pattes sont disposées symétriquement par rapport à un axe de symétrie longitudinal 9 du récipient 1.

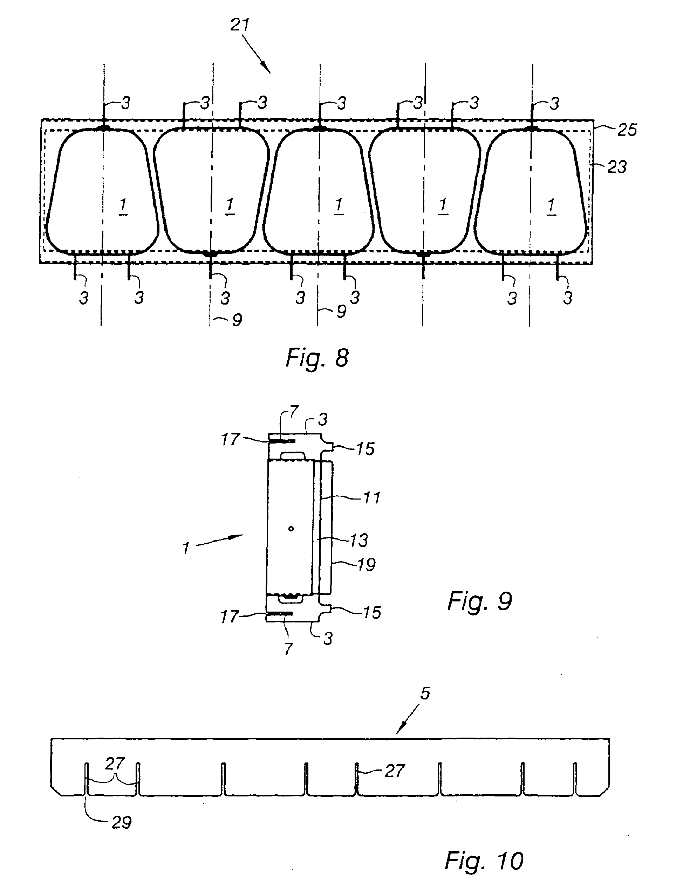

Avantageusement, comme on peut le voir sur la figure 9, la paroi verticale de chaque récipient 1 n'atteint pas son fond 11 ménageant un espace 13 d'écoulement des jus de cuisson et/ou des fluides colporteurs de calories. Dans un tel cas, il est avantageux de fixer le fond 11 sur les pattes 3. Par exemple, ces pattes ont sensiblement une forme de rectangle dont la hauteur est égale à la hauteur de la paroi du récipient augmentée de la largeur de l'espace 13. Ce rectangle est prolongé vers le bas par une languette 15 rectangulaire ayant des angles arrondis de raccordement au rectangle formant le reste de la patte. Dans l'exemple avantageux illustré, le fond 11 est solidarisé au niveau des pattes 3, la surface de contact s'étendant de la face interne (verticale en position d'utilisation) de la languette 15, en passant par l'angle de raccordement jusqu'à la face inférieure (en condition d'utilisation) de la partie sensiblement rectangulaire de la patte 3. La soudure est avantageusement effectuée uniquement au niveau de la zone de contact inférieure horizontale des pattes 3.

Dans l'exemple illustré, les encoches 7 présentent une entrée évasée 17 facilitant l'assemblage. Les encoches 7 sont, dans l'exemple illustré, dirigées vers le haut, en condition d'utilisation. Avantageusement, chaque récipient 1 est muni d'un couvercle. Dans l'exemple préféré de réalisation, chaque récipient 1 est muni, sous le fond 11, d'un couvercle 19 susceptible de s'adapter à un récipient identique disposé immédiatement en dessous dans une pile d'ustensiles de cuisson, selon la présente invention, empilés.

Sur la figure 8, on peut voir un module 21 comprenant cinq récipients 1 de la figure 6, deux récipients consécutifs étant montés tête-bêche, assemblés par deux cadres périphériques 23 et 25.

Sur la figure 10, on peut voir une tôle 5 transversale permettant l'assemblage des éléments 1 des figures 6 à 7 et 9, ou, avantageusement des modules 21 de la figure 8. La tôle 5 comporte des encoches 27 de réception des pattes 3 au niveau des encoches correspondantes 7. Dans l'exemple illustré, la tôle transversale 5 comporte huit encoches 27 dont la répartition correspond à la répartition des pattes 3 de la face du module 21 illustré dans la partie inférieure de la figure 8. La structure, selon la présente invention, comporte en outre un second type de tôle comportant sept encoches aux emplacements correspondants aux pattes 3 de la face du module 21 illustré sur la partie supérieure de la figure 8. Chaque encoche a une largeur correspondante à la somme des épaisseurs des pattes 3 qu'elle est censée recevoir augmentée du jeu permettant leur introduction. Par exemple, pour des pattes 3 réalisée dans une tôle d'acier inoxydable ayant trois millimètres d'épaisseur, les rainures 27 présentent avantageusement une épaisseur égale à 6,5 millimètres. Avantageusement, les entrées 29 des rainures ou encoches 27 s'évasent vers l'extérieur. Par exemple, elles comportent des pans coupés de 3 millimètres à 45°. Les encoches 27 des tôles 5 sont dirigées vers le bas.

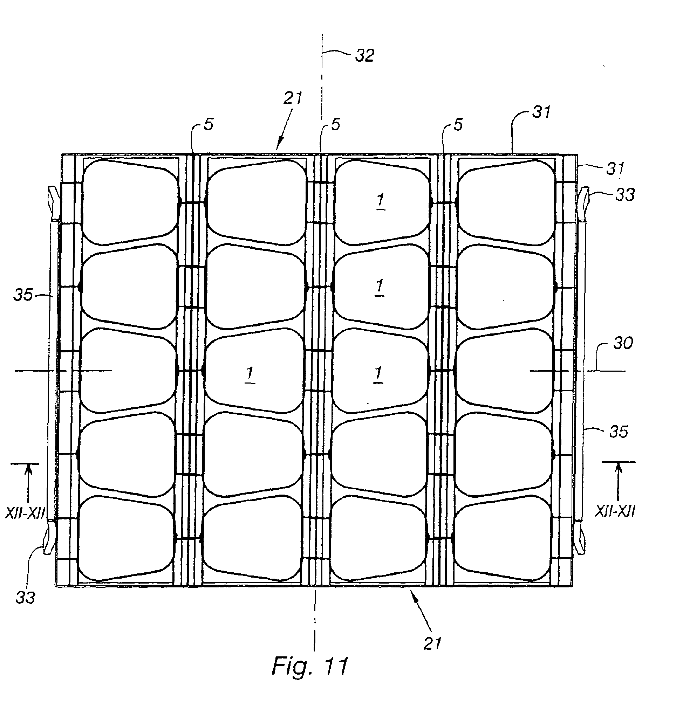

Sur les figures 11 à 15, on peut voir l'exemple préféré de réalisation d'une structure selon la présente invention formant un ustensile de cuisson industrielle de jambons. Cet ustensile comporte quatre modules 21 assemblés entre eux par trois tôles transversales 5. Dans l'exemple non limitatif illustré, cette structure est dépourvue de tôles 5 d'extrémité qui sont assemblées, par exemple par soudure, sur un cadre périphérique 31. Dans un tel cas, les pattes 3 dirigées vers l'extérieur de l'outil de cuisson sont dépourvues d'encoches ou rainures.

Il est à noter que l'ustensile de cuisson est avantageusement symétrique par rapport à un plan médian vertical longitudinal 30 et par rapport à un plan médian vertical transversal 32 Ainsi, l'ustensile de cuisson illustré sur la figure 11 est invariant par rapport à une rotation de 180° par rapport à son centre. En d'autres termes, les couvercles des récipients supérieurs s'adapteront parfaitement aux récipients inférieurs même si on retourne un des deux outils de cuisson selon la présente invention de 180° par rapport à un axe vertical.

La manipulation des ustensiles selon la présente invention s'effectue avantageusement à l'aide d'engins à fourche. Ainsi, au moins l'ustensile inférieur d'une pile d'ustensiles comporte des pieds ou analogues ménageant sous les récipients 1 un espace de passage de fourche. Avantageusement, chaque ustensile comporte des pieds 33 soudés, par exemple, sous le petit côté du cadre périphérique rectangulaire 31. En variante, non illustré, les pieds 33 sont soudés sur le grand côté du cadre périphérique rectangulaire 31. Avantageusement, chaque ensemble des pieds disposés sur un côté de l'ustensile selon la présente invention est relié, dans sa partie supérieure en positon d'utilisation, par une barre ou tube 35, facilitant les manipulations de l'ustensile. Avantageusement, les pieds 33 ont une forme évasée vers le bas, facilitant le centrage des ustensiles les uns au-dessus des autres lors de leur empilement.

Les structures selon la présente seront réalisées en des matériaux représentant la résistance mécanique désirée et la compatibilité avec les applications envisagées. Par exemple, pour des ustensiles de cuisson industrielle de jambons, on utilise avantageusement de l'acier inoxydable. Les divers éléments sont réalisés par découpes et pliages des tôles et assemblés notamment par soudure. Les éléments devant présenter une grande précision, comme par exemple, les tôles transversales 5 de la figure 10 sont avantageusement découpées au laser.

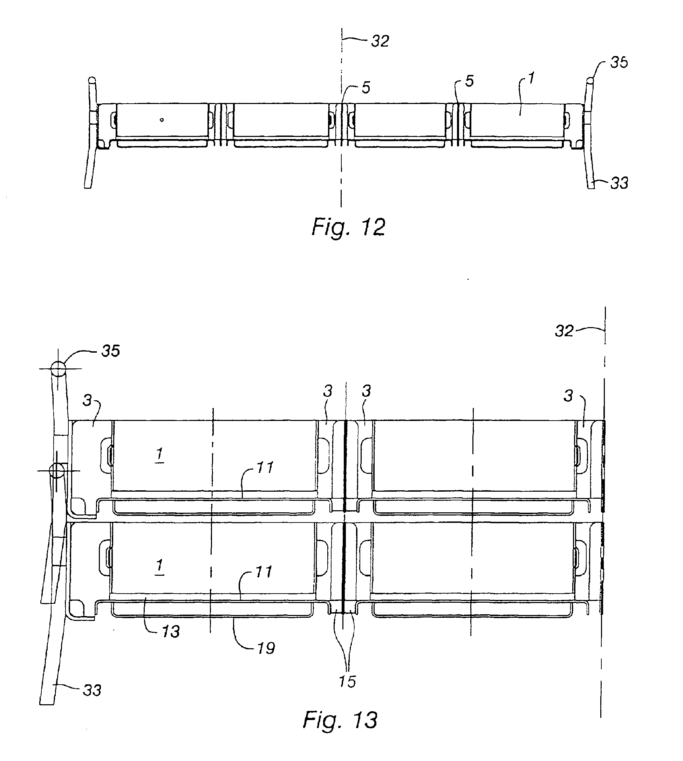

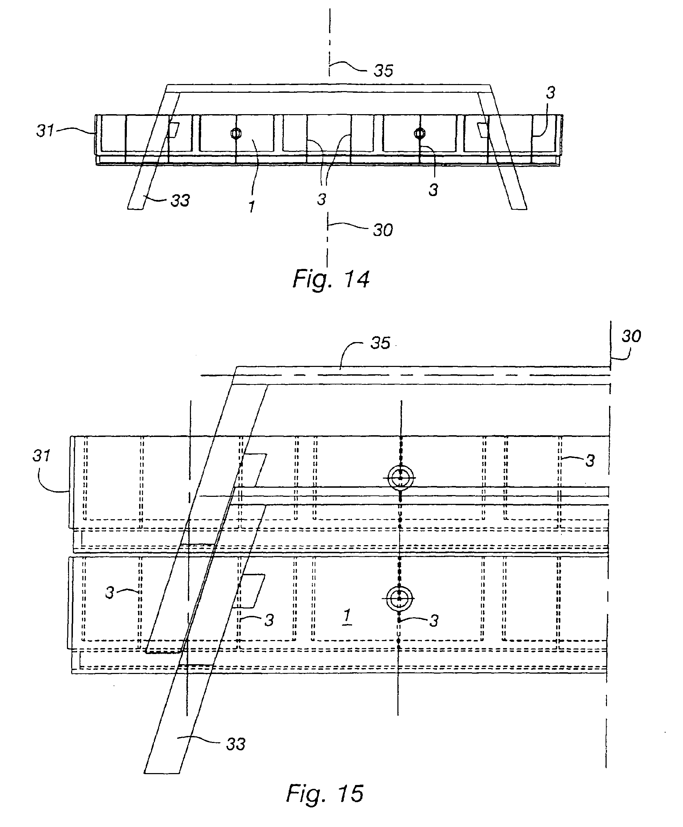

Dans les exemples illustrés sur les figures 13 et 15, les couvercles 19 ne pénètrent pas à l'intérieur des récipients 1 immédiatement inférieurs. Toutefois, en variante, les couvercles sont disposés plus bas de manière à pénétrer dans lesdits récipients immédiatement inférieurs.

Après emboîtement des encoches 7 et 27, les pattes 3 peuvent être solidarisées aux tôles ou poutres transversales 5 par exemple, par soudure ou brasure

La présente invention s'applique notamment à l'industrie mécanique.

La présente invention s'applique principalement à l'industrie agroalimentaire.

## Revendications

1. Structure rigide comportant une pluralité d'éléments (1) assemblés par des pattes ou languettes (3) avec une poutre ou tôle transversale (5) par rapport auxdites pattes ou languettes, **caractérisée en ce que** les pattes ou languettes (3) comportent des premières encoches d'assemblages (7), **en ce que** la poutre ou tôle transversale (5) comporte une deuxième encoche (27) complémentaire des premières encoches d'assemblages (7) desdites pattes ou languettes (3) et **en ce qu'**une pluralité des pattes ou languettes (3) est emboîtée au niveau de leurs premières encoches d'assemblages (7) dans une même deuxième encoche (27) de la poutre ou de la tôle transversale (5).

2. Structure rigide selon la revendication 1, **caractérisée en ce que** des éléments (1) assemblés par l'intermédiaire d'une même deuxième encoche (27) pratiquée dans la poutre ou tôle transversale (5) sont disposés de part et d'autre de ladite poutre ou tôle transversale (5), de préférence en vis à vis.

3. Structure rigide selon la revendication 1 ou 2, **caractérisée en ce que** deux éléments (1) assemblés par emboîtement de leurs pattes ou languettes (3) dans une même encoche (27) d'une poutre ou tôle transversale (5) sont disposés du même côté de cette poutre ou tôle transversale (5).

4. Structure rigide selon l'une quelconque des revendications précédentes, **caractérisée en ce que** les éléments (1) assemblés comportent au moins une première patte (3) saillante par rapport à une première face et une deuxième patte ou languette (3) saillante par rapport à une deuxième face, opposée à ladite première face de l'élément (1).

5. Structure rigide selon l'une quelconque des revendications précédentes, **caractérisée en ce qu'**elle comporte des moyens (23, 25) de groupage d'une pluralité d'éléments (1) en module (21) et **en ce que** les pattes ou languettes (3) des divers éléments (1) du module (21) dépassent du module de manière à permettre l'emboîtement de leurs encoches (7) dans les encoches correspondantes (27) d'une poutre ou tôle transversale (5).

6. Structure rigide selon l'une quelconque des revendications précédentes, **caractérisée en ce que** ladite structure est un ustensile de cuisson industrielle de jambons.

7. Structure rigide selon la revendication 6, **caractérisée en ce que** les éléments (1) sont des récipients individuels de cuisson de jambons notamment en forme de trapèze isocèle à angles arrondis.

8. Structure rigide selon l'une quelconque des revendications précédentes, **caractérisée en ce qu'**elle est symétrique par rapport à deux plans (30, 32) perpendiculaires.

9. Structure rigide selon la revendication 6, 7 ou 8, **caractérisée en ce que** ladite structure est empilable et **en ce qu'**elle comporte des pieds (33) permettant le passage de fourches d'un engin de manutention sous la structure inférieure d'une pile de structures empilées.

10. Structure rigide selon l'une quelconque des revendications 7 à 9, **caractérisée en ce qu'**elle comporte sous chaque récipient (1) de réception d'un jambon un couvercle (19) assurant le confinement et/ou le pressage de jambons se trouvant dans le récipient (1) immédiatement inférieur.

11. Procédé d'assemblage d'une structure rigide selon l'une quelconque des revendications précédentes, **caractérisé en ce qu'**il comporte les étapes consistant à emboîter dans une même encoche (27) d'une tôle ou d'une poutre transversale (5) au moins deux encoches complémentaires (7) pratiquées dans des patte ou languettes (3) solidarisées avec au moins deux éléments (1) à assembler.

## Claims

1. Rigid structure comprising a plurality of elements (1) assembled by tabs or tongues (3) with a beam or metal sheet (5) which is transversal to said tabs or tongues, **characterised in that** the tabs or tongues (3) comprise first assembly notches (7), **in that** the transversal beam or metal sheet (5) comprises a second notch (27) complementing the first attachment notches (7) of said tabs or tongues (3) and **in that** a plurality of tabs or tongues (3) are interlocked, at their first assembly notches (7), in the same second notch (27) of the transversal beam or metal sheet (5).

2. Rigid structure according to claim 1, **characterised in that** elements (1) assembled by means of the same second notch (27) made in the transversal beam or metal sheet (5) are arranged on either side of said transversal beam or metal sheet (5), preferably facing each other.

3. Rigid structure according to claim 1 or 2, **characterised in that** two elements (1) assembled by interlocking their tabs or tongues (3) in the same notch (27) of a transversal beam or metal sheet (5) are arranged on the same side of this transversal beam or metal sheet (5).

4. Rigid structure according to any one of the preceding claims, **characterised in that** the assembled elements (1) comprise at least one first tab (3) protruding in relation to a first face and one second tab or tongue (3) protruding in relation to a second face, opposite said first face of the element (1).

5. Rigid structure according to any one of the preceding claims, **characterised in that** it comprises means (23, 25) of grouping together a number of elements (1) as a module (21) and **in that** the tabs or tongues (3) of the various elements (1) of the module (21) jut out from the module so as to enable the interlocking of their notches (7) in the corresponding notches (27) of a transversal beam or metal sheet (5).

6. Rigid structure according to any one of the preceding claims, **characterised in that** said structure is an industrial ham-cooking utensil.

7. Rigid structure according to claim 6, **characterised in that** the elements (1) are individual ham-cooking containers, particularly in the shape of an isosceles trapezium with rounded corners.

8. Rigid structure according to any one of the preceding claims, **characterised in that** it is symmetrical in relation to two perpendicular planes (30, 32).

9. Rigid structure according to claim 6, 7 or 8, **characterised in that** said structure can be stacked and **in that** it comprises legs (33), allowing the forks of a handling appliance to pass under the bottom structure of a stack of structures.

10. Rigid structure according to any one of the claims from 7 to 9, **characterised in that** it comprises a cover below each ham container (1), for confining and/or pressing the ham contained in the container immediately below it.

11. Method of assembling a rigid structure according to any one of the preceding claims, **characterised in that** it comprises steps of interlocking, in the same notch (27) of a transversal beam or metal sheet, at least two complementary notches (7) made in the tabs or tongues (3) solidly attached to at least two elements (1) to be assembled.

## Patentansprüche

1. Starre Struktur bestehend aus einer Vielzahl von mit Laschen oder Leisten (3) zusammengebauten Elementen (1), mit einem quer zu den besagten Laschen oder Leisten verlaufenden Balken oder Blech (5), **dadurch gekennzeichnet, dass** die Laschen oder Leisten (3) erste Montagekerben (7) aufweisen, dass der Querbalken oder das Querblech (5) eine zweite Kerbe (27) umfasst, die die ersten Montagekerben (7) der besagten Laschen oder Leisten (3) ergänzt, und dass eine Vielzahl der Laschen oder Leisten (3) im Bereich ihrer ersten Montagekerben (7) in eine gleiche zweite Kerbe (27) des Querbalkens oder Querblechs (5) eingesteckt ist.

2. Starre Struktur nach Anspruch 1, **dadurch gekennzeichnet, dass** die über eine gleiche zweite, in dem Querbalken oder dem Querblech (5) vorgesehene Kerbe (27) zusammengebauten Elemente (1) beidseitig des besagten Querbalkens oder Querblechs (5), vorzugsweise gegenüberliegend angeordnet sind.

3. Starre Struktur nach Anspruch 1 oder 2, **dadurch gekennzeichnet, dass** zwei durch Einstecken ihrer Laschen oder Leisten (3) in eine gleiche Kerbe (27) eines Querbalkens oder Querblechs (5) zusammengebaute Elemente (1) auf der gleichen Seite dieses Querbalkens oder Querblechs (5) angeordnet sind.

4. Starre Struktur nach einem der vorangehenden Ansprüche, **dadurch gekennzeichnet, dass** die zusammengebauten Elemente (1) mindestens eine erste, von einer ersten Seite abstehende Lasche (3) und eine zweite, von einer zweiten Seite, der besagten ersten Seite des Elements (1) gegenüberliegende abstehende Lasche oder Leiste (3) umfassen.

5. Starre Struktur nach einem der vorangehenden Ansprüche, **dadurch gekennzeichnet, dass** sie Gruppierungsmittel (23, 25) einer Vielzahl von Elementen (1) zu einem Modul umfasst, und dass die Laschen oder Leisten (3) der einzelnen Elemente (1) des Moduls (21) über das Modul hinausragen, um das Einstecken ihrer Kerben (7) in die entsprechenden Kerben (27) eines Querbalkens oder Querblechs (5) zu ermöglichen.

6. Starre Struktur nach einem der vorangehenden Ansprüche, **dadurch gekennzeichnet, dass** die besagte Struktur ein industrielles Kochutensil von Schinken ist.

7. Starre Struktur nach Anspruch 6, **dadurch gekennzeichnet, dass** die Elemente (1) einzelne Kochbehälter von Schinken sind, insbesondere in Form eines gleichschenkligen Trapezes mit abgerundeten Ecken.

8. Starre Struktur nach einem der vorangehenden Ansprüche, **dadurch gekennzeichnet, dass** sie in Bezug auf zwei senkrechte Ebenen (30, 32) symmetrisch ist.

9. Starre Struktur nach Anspruch 6, 7 oder 8, **dadurch gekennzeichnet, dass** die besagte Struktur stapelbar ist, und dass sie Füße (33) umfasst, die das Durchschieben von Gabeln eines Förderzeugs unter der unteren Struktur eines Stapels aufgestapelter Strukturen ermöglicht.

10. Starre Struktur nach einem der Ansprüche 7 bis 9, **dadurch gekennzeichnet, dass** sie unter jedem Aufnahmebehälter (1) eines Schinkens einen Deckel (19) umfasst, der das Einschließen und/oder Pressen von Schinken gewährleistet, die in dem unmittelbar darunter befindlichen Behälter (1) eingeschlossen sind.

11. Zusammenbauverfahren einer starren Struktur nach einem der vorangehenden Ansprüche, **dadurch gekennzeichnet, dass** es die Schritte umfasst, in eine gleiche Kerbe (27) eines Querblechs oder Querbalkens (5) mindestens zwei komplementäre Kerben (7) einzustecken, die in Laschen oder Leisten (3) vorgesehen sind, die mit mindestens zwei zusammenzubauenden Elementen (1) fest verbunden sind.
